# EUROPÄISCHE PATENTSCHRIFT

(11) **EP 0 718 148 B1**
(45) Veröffentlichungstag und Bekanntmachung des Hinweises auf die Patenterteilung: **15.07.1998**
(21) Anmeldenummer: 95119916.5
(22) Anmeldetag: 16.12.1995
(51) Int. Cl.: B60N 3/04

(54) **Verfahren zur Herstellung einer einen Einsatz aus Teppichboden aufweisenden Fussmatte**
Method for fabricating a foot pad with an insert of carpet
Procédé de fabrication d'un essuie-pieds équipé d'un empiècement de tapis

(30) Priorität: 21.12.1994 DE 4445770
(43) Veröffentlichungstag der Anmeldung: 26.06.1996
(73) Patentinhaber: WEGU Gummi- und Kunststoffwerke GmbH & Co. KG, D-34123 Kassel (DE)
(72) Erfinder: Brill, Hartmut, D-37242 BSA-Dudenrode (DE)
(74) Vertreter: Rehberg, Elmar, Dipl.-Ing.

(56) Entgegenhaltungen:
- WO-A-89/04760
- DE-A- 1 429 233
- FR-A- 2 647 729
- GB-A- 2 052 385
- PATENT ABSTRACTS OF JAPAN vol. 013, no. 432 (M-874), 27.September 1989 & JP-A-01 165420 (KAZUO USHIJIMA), 29.Juni 1989,
- PATENT ABSTRACTS OF JAPAN vol. 010, no. 331 (M-533), 11.November 1986 & JP-A-61 135836 (KINUGAWA RUBBER IND CO LTD), 23.Juni 1986,
- PATENT ABSTRACTS OF JAPAN vol. 94, no. 011 & JP-A-06 304058 (HAYAKAWA RUBBER CO LTD), 1.November 1994,
- PATENT ABSTRACTS OF JAPAN vol. 005, no. 025 (M-055), 14.Februar 1981 & JP-A-55 154144 (SHINODA GOMME KK), 1.Dezember 1980,

## Beschreibung

Die Erfindung betrifft ein Verfahren zur Herstellung einer einen Einsatz aus Teppichboden und einen mattenförmigen Grundkörper aus Gummi aufweisenden Fußmatte für Kraftfahrzeuge nach dem Oberbegriff des Anspruchs 1 und auf eine Fußmatte nach dem Obergegriff des Anspruchs 6. Die Fußmatte weist einen mattenförmigen Grundkörper auf, der in seinem Umriß an die jeweilige Form des Bodens der Fahrgastzelle des Kraftfahrzeuges abgestimmt ist. Der Grundkörper kann mit einem oder mehreren Einsätzen aus Teppichboden versehen sein.

Es sind Fußmatten für Kraftfahrzeuge bekannt, die neben einem Grundkörper aus vulkanisiertem Rohgummi einen oder mehrere Einsätze aus Textilboden aufweisen. Die Einsätze sind dabei formatmäßig begrenzt, meist ausgestanzt und mit dem Grundkörper aus vulkanisiertem Rohgummi dauerhaft verbunden. Der verbindungsvorgang wird durch eine Klebung erreicht, indem nach der Vulkanisation des Rohgummis des Grundkörpers in einem gesonderten Arbeitsschritt Kleber auf eines der beiden Teile aufgetragen wird. Anschließend erfolgt das Zusammenfügen des Einsatzes und des Grundkörpers und das Aushärten des Klebers. Es ist auch bekannt, den oder die Einsätze in Vertiefungen im Grundkörper einzukleben. Diese Art der Herstellung einer Fußmatte ist besonders aufwendig, da sie einen gesonderten Klebevorgang erfordert. Die damit erreichbare Haftung zwischen dem Einsatz aus Teppichboden und dem Grundkörper ist nur begrenzt, und zwar entsprechend den Eigenschaften des Klebers. Solche Einsätze werden u. a. an der Stelle angeordnet, an der z. B. die Ferse des Fußes des Fahrers des Kraftfahrzeuges hinter dem Gaspedal auf die Fußmatte aufgesetzt wird. Dieser Bereich ist besonders beansprucht und durch die zwangsläufigen Walkbewegungen besteht die Gefahr, daß sich hier ein Einsatz vergleichsweise schnell von dem Grundkörper der Fußmatte löst und insoweit die dauerhafte Verbindung verlorengeht. Ein weiterer Nachteil dieser geklebten Einsätze ist darin zu sehen, daß sie relativ hoch auf dem Grundkörper aufbauen, so daß entweder der Grundkörper selbst eine relativ große Höhe haben muß oder aber der Einsatz relativ weit nach oben absteht. Letzteres ist für die Benutzung nachteilig.

Ein Verfahren nach dem Oberbegriff des Anspruchs 1 und eine Fußmatte nach dem Oberbegriff des Anspruchs 6 sind aus der GB-A-2 052 385 bekannt. Dabei ist eine Verbindung des textilen Materials und des elastomeren Materials durch Anvulkanisieren vorgesehen. Zum Verankern der einzelnen Fasern des textilen Materials an der Fußmatte werden die Fasern durch Einwirkung von Druck und Wärme zunächst aufgeweicht und dann teilweise miteinander versintert.

Der Erfindung liegt die Aufgabe zugrunde, ein Verfahren zur Herstellung einer Fußmatte mit Einsatz nach dem Oberbegriff des Anspruchs 1 und eine Fußmatte nach dem Oberbegriff des Anspruchs 6 aufzuzeigen, bei denen eine dauerhafte Verbindung des Einsatzes mit dem Grundkörper ohne ein Veränderung der Struktur des Einsatzes erreicht wird.

Erfindungsgemäß wird dies bei dem Verfahren durch die Merkmale des Anspruchs 1 erreicht.

Die Erfindung geht von dem Gedanken aus, den gesonderten Herstellungsschritt des Klebens zu vermeiden und den formatmäßig festgelegten Rohling aus Rohgummi zunächst in die geöffnete Form einzulegen. Sodann wird aber zusätzlich oder auch gleichzeitig mit dem Rohling aus Rohgummi der oder die Einsätze in die Form eingebracht, und zwar an der Stelle, an der sie mit dem Grundkörper dauerhaft verbunden werden sollen. Sodann wird die Form geschlossen, wodurch der Einsatz und der Rohling aus Rohgummi unter mechanischen Druck gesetzt werden, der sich im Laufe der weiteren Bearbeitungsschritte in der Regel noch erhöht. Durch Beheizung der Form wird die Temperatur des Rohlings aus Rohgummi so gesteigert, daß die Vulkanisationstemperatur im Bereich des Grundkörpers erreicht wird. Im Bereich des Einsatzes hingegen erfolgt während der Vulkanisation des Rohlings zu dem Grundkörper eine Kühlung. Zu diesem Zweck ist die Form entsprechend ausgebildet und besitzt Kühlflächen, die ihre Wirkung durch direkte Anlage an dem Einsatz erbringen. Die Kühlung der Kühlflächen kann durch eine Durchleitung von Kühlwasser an dieser Stelle der Form erfolgen. Die Kühlung hat den Zweck, die wesentlichen Bereiche des Einsatzes auf einer für den Einsatz nicht schädlichen Temperatur zu halten. So darf weder die Erweichungstemperatur der Fasern des Einsatzes aus Teppichboden noch die Erweichungstemperatur eines eventuell bei der Herstellung des Teppichbodens eingesetzten Bindemittels erreicht werden. Andererseits ist es aber erforderlich, den Rohling aus Rohgummi zu dem Grundkörper zu vulkanisieren, so daß im Grundkörper die entsprechenden Temperaturen erreicht werden müssen. Das neue Hersteilverfahren ist preiswerter durchführbar, weil die Kosten des Klebers und der gesamte Arbeitsschritt des Verklebens in Fortfall kommen. Trotzdem entsteht eine sichere abriebfeste Verbindung zwischen dem Einsatz aus Teppichboden und dem Grundkörper der Fußmatte aus Gummi, und zwar über die gesamte Fläche des Einsatzes. Die Fasern des Einsatzes werden gleichsam bei der Vulkanisation des Gummis zumindest teil- und bereichsweise in den Gummi eingeformt, von diesem umschlossen und gehalten. Es besteht nicht die Gefahr, daß sich der Einsatz bei normalem Gebrauch von dem Grundkörper lösen könnte. Eine solche Fußmatte weist eine verlängerte Lebensdauer auf. Die Anwendung von mechanischem Druck, also dem Zusammenpressen zwischen dem Rohling aus Rohgummi und dem formatmäßig festgelegten Einsatz ist nicht nur förderlich für die beabsichtigte Kühlwirkung, sondern bringt auch den Effekt der gegenseitigen Durchdringung und Verankerung. Ein weiterer Vorteil der mechanischen Druckanwendung besteht darin, daß die Höhe des Einsatzes hierdurch und durch die Wärmeeinwirkung vermindert wird. Der Einsatz wird bei seiner dauerhaften Verbindung gleichsam selbst verdichtet, wobei auch vorteilhaft seine Höhe abnimmt. Ein weiterer Vorteil des neuen Verfahrens besteht darin, daß auch vergleichsweise preiswerte Teppichböden, insbesondere Nadelfilze geringer Höhe, verwendet werden können. Als Teppichboden kann aber auch Schlingenware, Velourteppichboden u. dgl. eingesetzt werden. Durch die Kühlung wird es sogar möglich, Teppichboden als Einsatz zu verwenden, dessen Erweichungstemperatur unterhalb der Vulkanisationstemperatur liegt.

Der Einsatz aus Teppichboden wird in der Form so gekühlt, daß er während der Vulkanisation seine Erweichungstemperatur nicht überschreitet. Es ist jedoch nicht schädlich, wenn insbesondere im Übergangsbereich, in welchem sich der Rohgummi des Grundkörpers und die Fasern des Einsatzes aus Teppichboden gegenseitig durchdringen, entsprechende Temperaturen erreicht werden, so daß hierdurch die Einbettung und Haftung der Fasern in dem Rohgummi des Grundkörpers verbessert wird. Andererseits wird der Einsatz aus Teppichboden in der Form so gekühlt, daß die Vulkanisationstemperatur des Rohgummis im Bereich benachbart zu dem Einsatz aus Teppichboden erreicht wird.

Die mechanische Druckanwendung kann durch entsprechende Dimensionierung der geteilten Form und der Einsatzmengen des Rohlings und des Einsatzes festgelegt werden. Auch ist es möglich, daß der Rohling aus Rohgummi mit überschüssiger Masse in die Form eingebracht wird, so daß der Schließvorgang der geteilten Form den mechanischen Druck herbeiführt oder zumindest einleitet.

Die Fasern des Einsatzes aus Teppichboden können durch die mechanische Druckanwendung während der Vulkanisation in die Masse des Rohgummis eingepreßt und von dieser Masse eingebettet und fixiert werden. Eine oberflächliche Erweichung der Fasern des Einsatzes aus Teppichboden im Bereich der gegenseitigen Durchdringung mit der Masse des Rohgummis ist dabei nicht schädlich.

Bei der Fußmatte wird die Aufgabe der Erfindung durch die Merkmale des Anspruchs 6 gelöst.

Der Gedanke der Erfindung besteht darin, die Fasern des Einsatzes aus Teppichboden nicht nur durch eine Klebung oberflächlich gegenüber dem Grundkörper aus Gummi zu fixieren, sondern beide Teile ineinander zu verankern, um so eine vergleichsweise abriebfestere Verbindung zwischen dem Einsatz und dem Grundkörper zu erzielen, der den Beanspruchungen insbesondere im Bereich der Ferse des Fahrers eines Kraftfahrzeuges gerecht wird. Trotz dieser verbesserten Eigenschaften läßt sich eine solche Fußmatte preiswerter herstellen als durch einen gesonderten Klebevorgang.

Der dem Einsatz aus Teppichboden benachbarte Bereich des Grundkörpers aus Gummi kann eine geringere Dicke als der übrige Bereich des Grundkörpers aufweisen. Die Anordnung einer geringeren Dicke an dieser Stelle ist insofern vorteilhaft, als damit sichergestellt ist, daß im Bereich dieser Materialschwachstelle dennoch die Vulkanisationstemperaturen verläßlich erreicht werden. Die einseitig angebrachte Kühlung wirkt sich nur im Bereich des Einsatzes aus Teppichboden aus. Insbesondere ist es möglich, daß der dem Einsatz aus Teppichboden benachbarte Bereich des Grundkörpers aus Gummi auf der Unterseite der Fußmatte hohl gestaltet ist und eine Anzahl verteilt angeordneter Noppen oder Rippen aus Gummi aufweist, mit denen die Fußmatte in diesem Bereich auf dem Boden des Kraftfahrzeuges aufliegt.

Der Einsatz aus Teppichboden kann im Grundkörper der Fußmatte versenkt angeordnet sein. Dies ist einerseits sinnvoll, um die Dicke des Grundkörpers in diesem Bereich gering zu halten und andererseits an der dem Benutzer zugekehrten Oberseite der Fußmatte keine großen Höhenunterschiede zur Auswirkung kommen zu lassen. Insbesondere kann der Einsatz aus Teppichboden mit seiner freien Oberfläche bündig zu Rippen oder sonstigen Erhebungen auf der Unterseite des Grundkörpers versenkt angeordnet sein, ohne daß es notwendig ist, die Dicke des Grundkörpers im übrigen Bereich allzu sehr vergrößern zu müssen.

Die Erfindung wird anhand eines bevorzugten Ausführungsbeispiels weiter erläutert und beschrieben. Es zeigen:
- Figur 1: einen Schnitt durch eine Fußmatte mit Grundkörper und Einsatz,
- Figur 2: eine vergrößernde Detaildarstellung eines Ausschnittes der Fußmatte im Bereich des Einsatzes und
- Figur 3: eine schematisierte Schnittdarstellung einer Form zur Herstellung der Fußmatte.

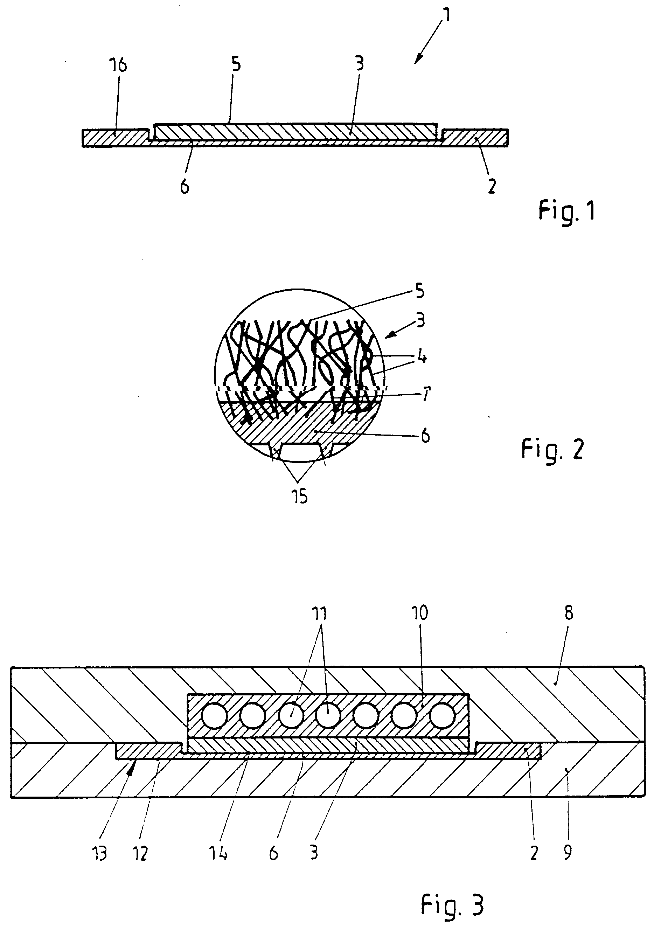

In Figur 1 ist ein Schnitt durch die Fußmatte 1 dargestellt. Die Fußmatte besteht aus einem Grundkörper 2 aus Gummi mit einem solchem Umriß, der der Bodenkontur des Kraftfahrzeuges angepaßt ist. Für die vorliegende Erfindung ist der Umriß des Grundkörpers 2 nicht wesentlich, weshalb er hier nur systematisch angegeben ist. Eine solche Fußmatte weist außer dem Grundkörper 2 aus Gummi mindestens einen Einsatz 3 aus Teppichboden auf, wobei für den Einsatz 3 sämtliche Arten von Teppichböden Verwendung finden können, insbesondere Nadelfilze und Schlingenware. Auch der Einsatz 3 ist formatmäßig festgelegt und wird in der Regel durch einen Stanzvorgang erzeugt. Der Einsatz 3 aus Teppichboden besitzt eine große Anzahl von Fasern 4, die in Figur 2 in vergrößernder Darstellung erkennbar sind. Die Fasern 4 bilden in ihrem einen Endbereich die freie Oberfläche 5, die den Füßen des Benutzers zugekehrt ist. Die Fasern 4 sind mit ihrem anderen Ende in dem dem Einsatz 3 benachbarten Bereich 6 des Grundkörpers 2 verankert. Die Rückseite 7 des Einsatzes 3 ist gleichsam in den Gummi des Bereiches 6 des Grundkörpers 2 eingeformt, wobei die Enden der Fasern 4 hier umschlossen und festgehalten werden. Damit ist ein ausgezeichneter Verbund zwischen dem Einsatz 3 und dem Grundkörper 2 hergestellt, so daß sich eine sichere abriebfeste Verbindung dieser beiden Teile ergibt. Diese Verbindung erstreckt sich über die gesamte Rückseite 7 des Einsatzes 3 und über den Bereich 6 des Grundkörpers 2.

Zur Herstellung der Fußmatte 1 dient eine schematisch in Figur 3 dargestellte und aus den Teilen 8 und 9 bestehende Form 8, 9. Der obere Teil 8 der Form 8, 9 besitzt einen Kühlkörper 10, der Kanäle 11 aufweisen kann, die von einem Kühlmedlum, beispielsweise Wasser, durchflossen sind. Die Dimensionierung und Anordnung des Kühlkörpers 10 in dem Teil 8 der Form 8, 9 richtet sich nach der Größe und relativen Lage des Einsatzes 3 relativ zu dem Grundkörper 2.

Die Herstellung einer solchen Fußmatte 1 mit Hilfe der Form 8, 9 wird wie folgt durchgeführt:
In die geöffnete Form 8, 9 wird auf den Teil 9 in eine dort vorgesehene Vertiefung 12 ein formatmäßig festgelegter Rohling 13 aus Rohgummi, der später nach der Vulkanisation den Grundkörper 2 bildet, in der vorgesehenen Position eingelegt. Dieser Rohling 13 besitzt nun seinerseits eine Vertiefung 14, und zwar an der Stelle, die dem Bereich 6 gegenüberliegt. Damit ist es möglich, den Einsatz 3 positionsgenau in die Vertiefung 14 des Rohlings 13 einzulegen und erst nachfolgend die Form 8, 9 zu schließen. Die erforderlichen Steuer- und Schließmechanismen der Form 8, 9 sind aus Übersichtlichkeitsgründen nicht dargestellt. Durch den Schließvorgang wird der Rohling 13 und der Einsatz 3 unter Druck gesetzt. Anschließend wird die geschlossene Form 8, 9 beheizt, so daß im Bereich des Rohlings 13 die Vulkanisationstemperatur des Gummis erreicht wird. Um diese Vulkanisationstemperatur auch im Bereich 6 des Rohlings 3 sicher zu erreichen, besitzt der Bereich 6 gegenüber dem übrigen Bereich des Rohlings 13 eine vergleichsweise geringere Dicke. Andererseits erfolgt über den Kühlkörper 10 eine Kühlung des Einsatzes 3 während der Vulkanisation. Der Entzug von Wärme aus dem Einsatz 3 heraus ist dadurch verbessert, daß auch an dieser Stelle der Einsatz 3 unter mechanischem Druck steht, so daß die Kontaktflächen aneinander angepreßt werden. Die Kühlung mit Hilfe des Kühlkörpers 10 wird so gesteuert, daß die Erweichungstemperatur des Materials der Fasern 4 des Einsatzes 3 aus Teppichboden und/oder die Erweichungstemperatur eines bei der Herstellung des Teppichbodens verwendeten Bindemittels nicht überschritten wird.

Um die Dicke des Bereiches 6 des Grundkörpers 2 gering zu halten, kann der Bereich 6 des Grundkörpers auf der Unterseite der Fußmatte 1 hohl gestaltet sein und eine Anzahl verteilt angeordneter Noppen oder Rippen 15 aufweisen, wie sie in Figur 2 angedeutet sind. Diese Noppen 15 können bündig in der Unterseite der Fußmatte 1 enden. Die Fußmatte 1 mit ihrem Grundkörper 2 kann ansonsten, d. h. außerhalb des Bereiches des Einsatzes 3, nach oben abstehende Erhebungen 16 (Figur 1) besitzen, die meist rippenartig oder leistenartig ausgebildet sind. Durch die Anwendung des mechanischen Druckes wird die Dicke des Einsatzes 3 gegenüber seinem Ausgangszustand vermindert, was dazu genutzt werden kann, um die Oberfläche 5 des Einsatzes 3 bündig mit der Oberfläche der Erhebungen 16 des Grundkörpers 2 zu positionieren. Ein geringfügiger Überstand des Einsatzes 3, wie in Figur 1 dargestellt, schadet dabei nicht. Die Anwendung des mechanischen Druckes auf den Einsatz 3 führt jedoch in allen Fällen dazu, daß seine Ausgangshöhe vermindert wird. Es findet also gleichzeitig eine Verfestigung des Teppichbodens des Einsatzes 3 statt, die für eine lange Lebensdauer der Fußmatte sinnvoll ist.

### BEZUGSZEICHENLISTE

- 1: - Fußmatte
- 2: - Grundkörper
- 3: - Einsatz
- 4: - Faser
- 5: - Oberfläche
- 6: - Bereich
- 7: - Rückseite
- 8: - Teil
- 9: - Teil
- 10: - Kühlkörper
- 11: - Kanal
- 12: - Vertiefung
- 13: - Rohling
- 14: - Vertiefung
- 15: - Noppe
- 16: - Erhebung

## Patentansprüche

1. Verfahren zur Herstellung einer einen Einsatz (3) aus Teppichboden und einen mattenförmigen Grundkörper (2) aus Gummi aufweisenden Fußmatte (1) für Kraftfahrzeuge, wobei der Grundkörper (2) und der Einsatz (3) miteinander dauerhaft verbunden sind indem ein formatmäßig festgelegter Rohling (13) aus Rohgummi und der ebenfalls formatmäßig festgelegte Einsatz (3) aus Teppichboden in die geteilte Form (8, 9) eingebracht werden, indem nach dem Schließen der Form der Rohling (13) und der Einsatz (3) unter mechanischen Druck gesetzt werden und indem die Form beheizt wird, damit der Rohling (13) zu dem Grundkörper (2) vulkanisiert wird, **dadurch gekennzeichnet**, daß während der Vulkanisation des Rohlings (13) zu dem Grundkörper (2) der Einsatz (3) auf der Seite seiner späteren freien Oberfläche (5) in der Form (8, 9) gekühlt wird.

2. Verfahren nach Anspruch 1, **dadurch gekennzeichnet**, daß der Einsatz (3) aus Teppichboden in der Form (8, 9) so gekühlt wird, daß er während der Vulkanisation seine Erweichungstemperatur nicht überschreitet.

3. Verfahren nach Anspruch 1, **dadurch gekennzeichnet,** daß der Einsatz (3) aus Teppichboden in der Form (8, 9) so gekühlt wird, daß die Vulkanisationstemperatur des Rohgummis im Bereich (6) benachbart zu dem Einsatz (3) aus Teppichboden erreicht wird.

4. Verfahren nach Anspruch 1, **dadurch gekennzeichnet**, daß der Rohling (13) aus Rohgummi mit überschüssiger Masse in die Form (8, 9) eingebracht wird.

5. Verfahren nach Anspruch 1, **dadurch gekennzeichnet**, daß die Fasern (4) des Einsatzes (3) aus Teppichboden durch die mechanische Druckanwendung während der Vulkanisation in die Masse des Rohgummis eingepresst und von dieser Masse eingebettet und fixiert werden.

6. Fußmatte für Kraftfahrzeuge, mit einem mattenförmigen Grundkörper (2) aus Gummi und mindestens einem Einsatz (3) aus Teppichboden, die dauerhaft miteinander verbunden sind, **dadurch gekennzeichnet**, daß die Fasern (4) des Einsatzes (3) aus Teppichboden an ihrer dem Grundkörper (2) zugekehrten Rückseite (7) des Einsatzes (3) zumindest teilweise von dem vulkanisierten Rohgummi des Grundkörpers (2) eingeschlossen und so dauerhaft verankert sind.

7. Fußmatte nach Anspruch 6, **dadurch gekennzeichnet**, daß der dem Einsatz (3) aus Teppichboden benachbarte Bereich (6) des Grundkörpers (2) aus Gummi eine geringere Dicke als der übrige Bereich des Grundkörpers aufweist.

8. Fußmatte nach Anspruch 7, **dadurch gekennzeichnet**, daß der dem Einsatz (3) aus Teppichboden benachbarte Bereich (6) des Grundkörpers (2) aus Gummi auf der Unterseite der Fußmatte (1) hohl gestaltet ist und eine Anzahl verteilt angeordneter Noppen (15) oder Rippen aus Gummi aufweist.

9. Fußmatte nach Anspruch 6 bis 8, **dadurch gekennzeichnet**, daß der Einsatz (3) aus Teppichboden im Grundkörper (2) der Fußmatte versenkt angeordnet ist.

10. Fußmatte nach Anspruch 9, **dadurch gekennzeichnet**, daß der Einsatz (3) aus Teppichboden mit seiner freien Oberfläche (5) bündig zu Rippen oder sonstigen Erhebungen (16) auf der Oberseite des Grundkörpers (2) versenkt angeordnet ist.

## Claims

1. Method of fabricating a foot pad (1) for motor vehicles, having an insert (3) made of carpet and a mat-shaped main body (2) made of rubber, the main body (2) and the insert (3) being permanently connected to each other in that a blanket (13) made of raw rubber and being of predetermined size and the insert (3) made of carpet and also being of predetermined size are placed in the split mould (8, 9), in that, after closing the mould, the blanket (13) and the insert (3) are put under mechanical pressure, and in that the mould is heated so that the blanket (13) is vulcanized to the main body (2), **characterized** in that, during the vulcanization of the blanket (13) to the main body (2), the insert (3) is cooled within the mould (8, 9) on the side of its future free surface (5).

2. Method according to claim 1, **characterized** in that the insert (3) made of carpet is cooled within the mould (8, 9) in such a way that it does not exceed its softening temperature during the vulcanization.

3. Method according to claim 1, **characterized** in that the insert (3) made of carpet is cooled within the mould (8, 9) in such a way that the vulcanization temperature of the raw rubber is attained in a the region (6) neighbouring the insert (3) made of carpet.

4. Method according to claim 1, **characterized** in that the blanket (13) made of raw rubber is placed in the mould (8, 9) while having an excessive mass.

5. Method according to claim 1, **characterized in** that the fibres of the insert (3) made of carpet are pressed in the mass of the raw rubber by the application of mechanical pressure during the vulcanization, and are embedded and fixed by this mass.

6. Foot pad for motor vehicles, having a mat-shaped main body (2) made of rubber and at least one insert (3) made of carpet which are permanently connected to each other **characterized in** that the fibres (4) of the insert (3) made of carpet are, at the bottom side (7) of the insert turned towards the main body (2), at least partially enclosed by the vulcanized raw rubber of the main body (2), and thus, permanently anchored.

7. Foot pad according to claim 6, **characterized in** that the region (6) of the main body (2) made of rubber neighbouring the insert (3) made of carpet has a smaller thickness than the rest of the main body.

8. Foot pad according to claim 7, **characterized in** that the region (6) of the main body (2) made of rubber neighbouring the insert (3) made of carpet is hollow at the bottom side of the foot pad (1) and has a number of distributed knobs (15) or ribs made of rubber.

9. Foot pad according to claim 6 to 8, **characterized in** that the insert (3) made of carpet is lowered in the main body (2) of the foot pad.

10. Foot pad according to claim 9, **characterized in** that the insert (3) made of carpet is lowered, with its free surface (5) being on one level with ribs or other heightenings (16) on the upper side of the main body (2).

## Revendications

1. Procédé de fabrication d'un paillasson (1) pour véhicules automobiles, comportant un insert (3) en moquette et un corps de base (2) en caoutchouc, en forme de natte, le corps de base (2) et l'insert (3) étant assemblés entre eux durablement en ce qu'une ébauche (13) en caoutchouc cru, de format défini, et l'insert (3) en moquette également de format défini, sont introduits dans le moule (8, 9) en deux parties, en ce qu'après fermeture du moule l'ébauche (13) et l'insert (3) sont soumis à une pression mécanique et en ce que le moule est chauffé, afin que l'ébauche (13) soit vulcanisée pour donner le corps de base (2), caractérisé en ce que pendant la vulcanisation de l'ébauche (13) pour donner le corps de base (2), l'insert (3) est refroidi dans le moule (8, 9), sur le côté de sa future surface libre (5).

2. Procédé selon la revendication 1, caractérisé en ce que l'insert (3) en moquette est refroidi dans le moule (8, 9), de manière que pendant la vulcanisation il ne dépasse pas sa température de ramollissement.

3. Procédé selon la revendication 1, caractérisé en ce que l'insert (3) en moquette est refroidi dans le moule (8, 9), de manière que la température de vulcanisation du caoutchouc cru soit atteinte dans la zone (6) voisine de l'insert (3) en moquette.

4. Procédé selon la revendication 1, caractérisé en ce que l'ébauche (13) en caoutchouc cru est introduite dans le moule (8, 9), avec une masse excédentaire.

5. Procédé selon la revendication 1, caractérisé en ce que les fibres (4) de l'insert (3) en moquette sont pressées dans la masse du caoutchouc cru, pendant la vulcanisation, sous l'effet de l'application de la pression mécanique et sont noyées et fixées par cette masse.

6. Paillasson pour véhicules automobiles, comportant un corps de base (2) en caoutchouc, en forme de natte, et au moins un insert (3) en moquette, qui sont assemblés entre eux durablement, caractérisé en ce que sur la face arrière (7) de l'insert (3) tournée vers le corps de base (2), les fibres (4) de l'insert (3) en moquette sont enfermées, au moins partiellement, par le caoutchouc cru vulcanisé du corps de base (2) et sont ainsi durablement ancrées.

7. Paillasson selon la revendication 6, caractérisé en ce que la zone (6) du corps de base (2) en caoutchouc, voisine de l'insert (3) en moquette, présente une épaisseur inférieure à la zone restante du corps de base.

8. Paillasson selon la revendication 7, caractérisé en ce que la zone (6) du corps de base (2) en caoutchouc, voisine de l'insert (3) en moquette, est creuse sur la face inférieure du paillasson (1) et présente un nombre de boutons (15) ou nervures en caoutchouc disposés répartis.

9. Paillasson selon les revendications 6 à 8, caractérisé en ce que l'insert (3) en moquette est encastré dans le corps de base (2) du paillasson.

10. Paillasson selon la revendication 9, caractérisé en ce que l'insert (3) en moquette est disposé encastré avec sa surface libre (5) à fleur de nervures ou d'autres reliefs (16) de la face supérieure du corps de base (2).
